# EUROPEAN PATENT APPLICATION

(11) **EP 2 095 749 A1**
(43) Date of publication of application: **02.09.2009**
(21) Application number: 08405061.6
(22) Date of filing: 28.02.2008
(51) Int. Cl.: A47J 31/60

(54) **Beverage machine with a water tank**

(71) Applicant: Nestec S.A., 1800 Vevey (CH)
(72) Inventor: Turchi, Daniel, 1094 Paudex (CH); Achtnich, Ulrich, 8953 Dietikon (CH); Kathriner, Peter, 6060 Sarnen (CH); Brügger, Daniel, 6010 Kriens (CH)
(74) Representative: Nückel, Thomas

(57) **Abstract**

The beverage machine according to the invention comprises a water tank (1) with a tank nozzle (5), which forms a first water outlet (60), and which is provided for connecting the water tank (1) with a filter cartridge (3). Furthermore, the water tank (1) comprises a water channel (6) in the floor area, which forms a second water outlet (61).

## Description

### Technical field

The present invention relates to a beverage machine with a water tank and a water filter. The beverage machine can be for example a coffee machine.

A water filter cartridge is put in a water tank of a beverage machine to treat the raw water in the water tank. Granular filter material is located inside of the water filter cartridge to soften water flowing through the filter cartridge. Furthermore therewith small particles can be filtered out. For sucking the water through the filter cartridge the beverage machine can comprise a suction pump.

### Background of the invention

In the prior art DE 10 2004 049 876 A1 a filter cartridge is described which comprises filtering means, an upflow chamber and a downflow chamber which communicate with one another in the upper region. Furthermore, the filter cartridge comprises an inlet opening and an inlet region arranged upstream of the inlet opening and an outlet opening which are both arranged in the bottom region. The outlet opening is connected to the inlet region via a bypass arranged in a lower portion of the upflow chamber and/or the downflow chamber or underneath the upflow and/or downflow chamber.

### Summary of the invention

An object of the invention is to provide a beverage machine, by which the water quality is constantly and durably improved.

Advantageously the hardness of the water is reduced and the pH-value stays unchanged. A further advantage is that the improvement of the water quality becomes predictable and that the water quality becomes nearly constant over a long time.

According to one aspect of the invention, the object is achieved by a beverage machine with a water tank with the features of the independent claim 1.

The beverage machine according to the invention comprises a water tank with a tank nozzle, which forms a first water outlet, and which is provided for connecting the water tank with a filter cartridge. Furthermore, the water tank comprises a water channel in the floor area, which forms a second water outlet.

Advantageous further developments of the invention arise from the characteristics indicated in the dependent patent claims.

In an embodiment of the beverage machine according to the invention the water channel is calibrated. Therefore for example, the diameter and/or the length of the water channel are taken into account. With a calibrated water channel a leveling of the filtering characteristic can be achieved over time.

In another embodiment of the beverage machine according to the invention the water channel is integrated in the tank nozzle. This has the advantage, that no further valve or sealing element is necessary to avoid leakage when the water tank is removed from the beverage machine.

Preferably, the water channel is arranged in the floor of the water tank of the beverage machine according to the invention.

Advantageously, the tank nozzle is welded or glued on the floor of the water tank of the beverage machine according to the invention.

In a further improvement of the beverage machine according to the invention the water channel comprises a hole in the tank nozzle and a channel section, which extends between the tank nozzle and the floor of the water tank. The channel section is connected with the hole.

In a further embodiment of the beverage machine according to the invention the water channel is arranged in the floor of the water tank.

Furthermore, in the beverage machine according to the invention the tank nozzle can comprise a collar, whereby the water channel is arranged below the collar.

Finally, the beverage machine according to the invention can comprise a valve, which is provided at the outlet of the water tank. This has the advantage, that the water tank can be removed from the beverage machine but no water leaks out.

### Brief description of the drawings

The invention and its embodiments will be more fully appreciated by reference to the following detailed description of presently preferred but nonetheless illustrative embodiments in accordance with the present invention when taken in conjunction with the accompanying drawings.

The figures are illustrating:
- Figure 1: an example of a water tank with a filter car- tridge,
- Figure 2: the water tank with the tank nozzle without the filter cartridge,
- Figure 3: the tank nozzle in a three dimensional view,
- Figure 4: a second embodiment of the water tank with the tank nozzle and the filter cartridge,
- Figure 5: the second embodiment of the tank nozzle,
- Figure 6: a third embodiment of the water tank with the tank nozzle and the filter cartridge, and
- Figure 7: the third embodiment of the water tank from an- other view.

### Detailed description of the drawings

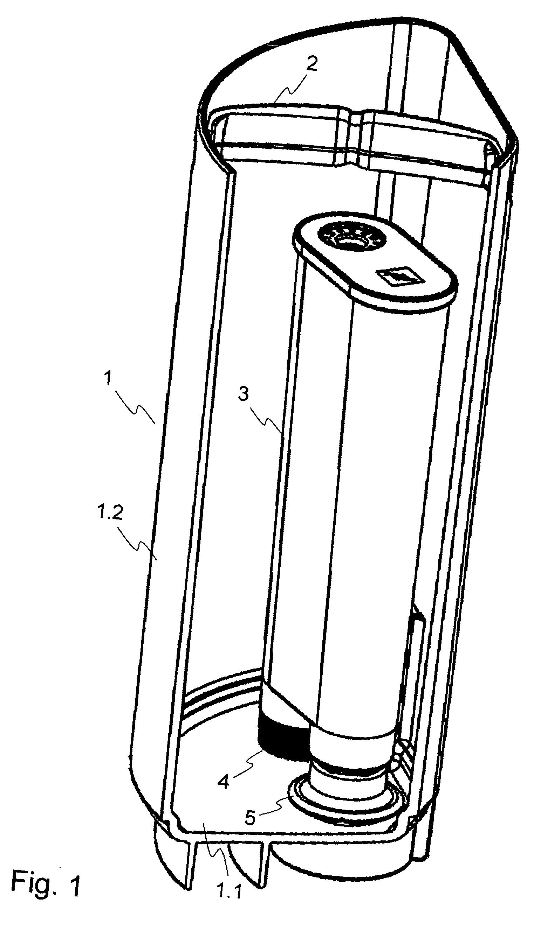

In FIG. 1 an embodiment of a water tank 1 with a filter cartridge 3 is depicted. At the top area of the side wall 1.2 of the water tank 1 a bow 2 is arranged so that one can bear the water tank 1. In particular, this is helpful when the water tank 1 is removed from the beverage machine. On the floor 1.1 of the water tank 1 a tank nozzle 5, which is part of the water tank 1, is arranged for receiving a water filter cartridge 3.

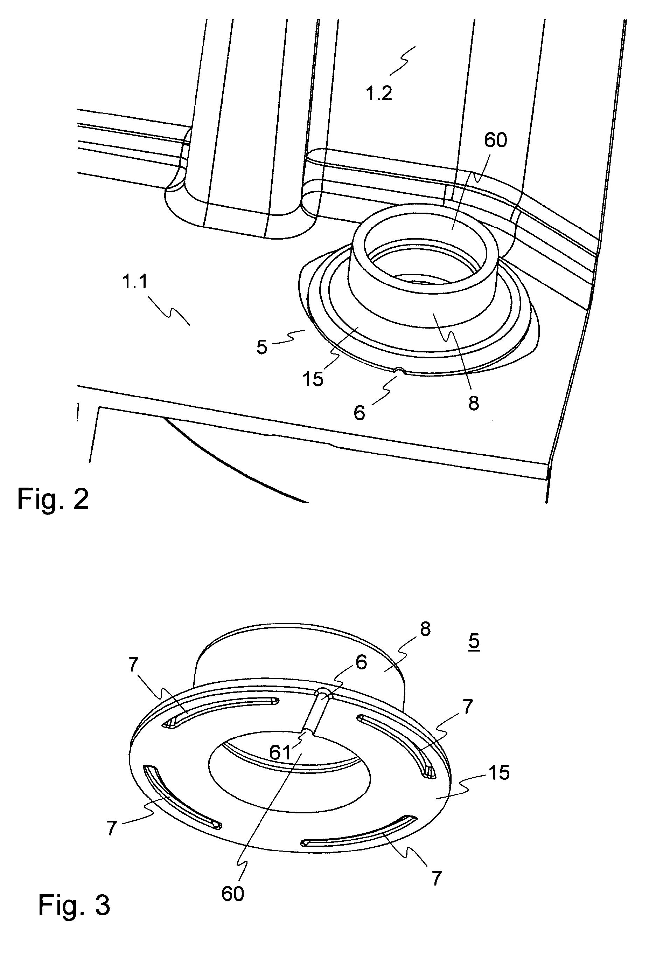

In FIG. 2 the water tank 1 is shown with the tank nozzle 5 but without the filter cartridge 3. The tank nozzle 5 comprises a circular collar 8 and a flange 15. As shown in FIG. 3 the flange 15 of the tank nozzle 5 comprises four grooves 7. The floor 1.1 of the water tank 1 is provided with corresponding elevations, which are not shown in the figures. During the assembly the grooves 7 of the tank nozzle 5 are positioned over the elevations and form a tight fit between the tank nozzle 5 and the floor 1.1. The tank nozzle 5 can be glued, bonded or welded on the floor 1.1 of the water tank 1. The tank nozzle 5 comprises a further groove 6, which forms a channel when the tank nozzle 5 is fixed on the floor 1.1 of the water tank 1. This water channel forms a bypass and connects the interior of the water tank 1 with the water outlet of the water tank. The diameter of the water channel is calibrated to provide a leveling of the filtering characteristics over time. It is in general less than 2 mm and depends among other things on the length and form of the water channel.

The diameter of the collar 8 is matched to the diameter of the outlet 14 of the water filter cartridge 3.

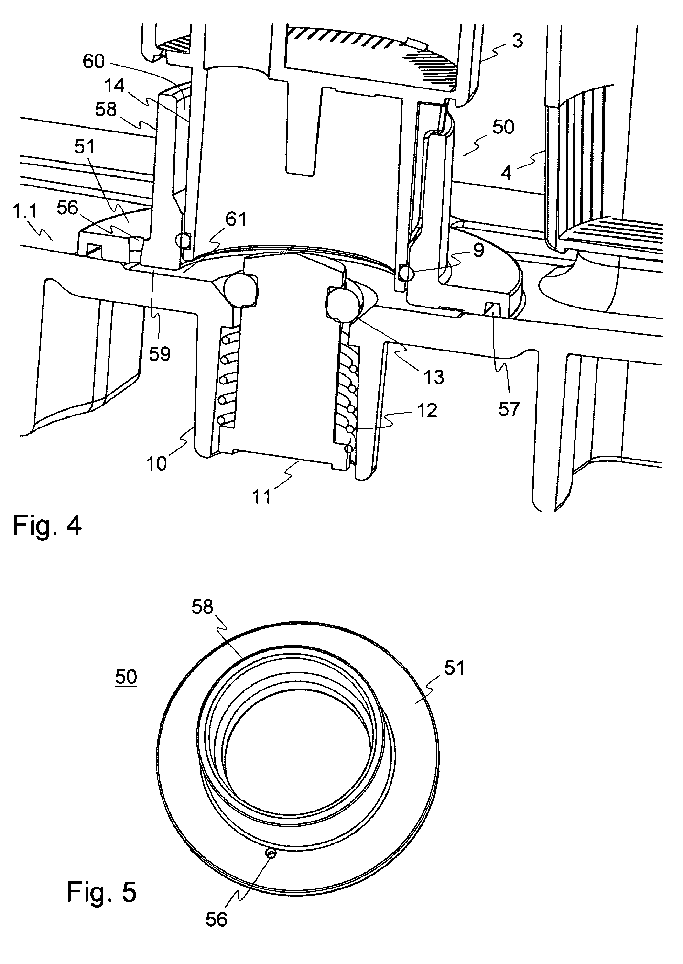

FIG. 4 shows a second embodiment of the water tank 1 with a tank nozzle 50 and the filter cartridge 3, whereby the collar 58 of the tank nozzle 50 and the filter cartridge 3 remain unchanged. In contrary to the tank nozzle 5, as depicted in FIG. 2 and 3, the tank nozzle 50 comprises a vertical hole 56 in the flange 51. The second embodiment of the tank nozzle 50 is shown in FIG. 5 a three dimensional view. The floor 1.1 of the water tank 1 comprises in the outlet area a circular recess 59 forming a channel section. The diameter of the recess 59 is smaller than the outer diameter of the flange 51. The hole 56 stays in conjunction with the recess 59. The hole 56 and the recess 59 form a water channel or bypass, which connects the interior of the water tank 1 with the external tank outlet 10 of the water tank 1.

The recess 59 can also be integrated in the flange 51 of the tank nozzle 50. This is not shown in the figures.

The external tank outlet 10 comprises a plunger 11 which is kept by means of a spring 12 in a closed position, when the water tank 1 is removed from the beverage machine. At the upper end of the plunger 11 a sealing 13 is provided. When the water tank 1 is fixed on the beverage machine, the plunger 11 is pressed upwards and the external outlet 10 is opened.

Similar to the first embodiment of the tank nozzle 5, the tank nozzle 50 comprises several grooves 57. The floor 1.1 of the water tank 1 is provided with corresponding elevations. During the assembly the grooves 57 of the tank nozzle 50 are positioned over the elevations of the floor and form a tight fit between the floor 1.1 and the tank nozzle 50. The tank nozzle 50 can be glued, bonded or welded on the floor 1.1 of the water tank 1.

In the first and the second embodiment (FIG. 1 to 5), the water tank 1 has two outlets 60 an 61. The first one is provided to receive the filter cartridge 3, and the second one is provided to form a water channel, with which raw water can be sucked out of the water tank without being filtered. In the first and the second embodiment the two outlets 60 and 61 lead to the same external tank outlet 10 of the water tank 1.

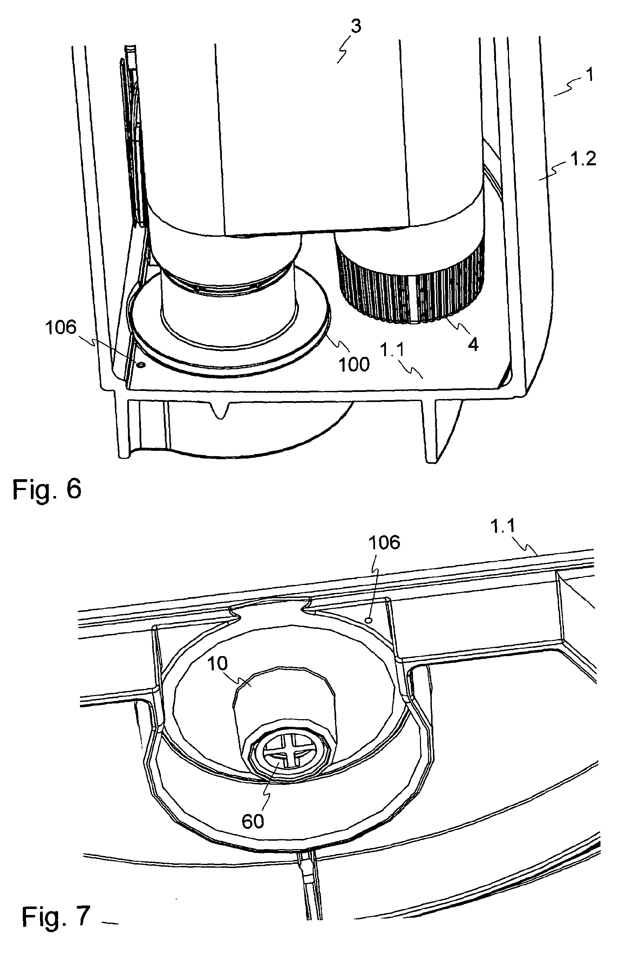

In FIG. 6 a third embodiment of the water tank 1 with a tank nozzle 100 and the filter cartridge 3 are depicted, whereby the filter cartridge 3 remains unchanged. In contrary to the first and second embodiment, the water tank 1 comprises a hole 106 in the floor 1.1, which is arranged beside the tank nozzle 100. In this embodiment the water tank 1 has also two outlets 60 and 106, but the hole 106, which forms the water channel, does not connect the interior of the water tank 1 with the external outlet 10, but the interior of the water tank 1 with the outside of the water tank in parallel to the external outlet 10. The external outlet 10 and the hole 106 can be connected beyond the water tank 1 (this is not shown in the figures 6 and 7).

In FIG. 7 the third embodiment of the water tank 1 is shown from another perspective.

Having illustrated and described a preferred embodiment for a novel beverage machine with a water tank and a filter cartridge, it is noted that variations and modifications in the machine, the water tank and the filter cartridge can be made without departing from the spirit of the invention or the scope of the appended claims.

### Reference signs

- 1: water tank
- 1.1: base
- 1.2: sidewall
- 2: bow
- 3: filter cartridge
- 4: water inlet
- 5: tank nozzle
- 6: bypass
- 7: groove
- 8: collar
- 9: sealing
- 10: external tank outlet
- 11: plunger
- 12: spring
- 13: sealing
- 14: outlet
- 15: flange
- 50: tank nozzle
- 51: flange
- 56: bypass
- 57: groove
- 58: collar
- 59: channel
- 60: outlet
- 61: outlet
- 100: tank nozzle
- 106: bypass

## Claims

1. Beverage machine with a water tank,
- wherein the water tank (1) comprises a tank nozzle (5; 50; 100) forming a first water outlet (60) and which is provided to connect the water tank (1) with a filter cartridge (3), and
- wherein the water tank (1) comprises a water channel (6; 56, 59; 106) in the floor area forming a second water outlet (61; 106).

2. Beverage machine according to claim 1,
wherein the water channel (6; 56, 59; 106) is a calibrated water channel.

3. Beverage machine according to claim 1 or 2,
wherein the water channel (6; 56, 59) is integrated in the tank nozzle (5; 50).

4. Beverage machine according to claims 1, 2 or 3,
wherein the tank nozzle (5; 50) is glued or welded on the floor (1.1) of the water tank (1).

5. Beverage machine according to one of the claims 1 to 4,
- wherein the water channel (56, 59) comprises a hole (56) in the tank nozzle (50) and a channel section (59), which is provided between the tank nozzle (50) and the floor (1.1) of the water tank (1), and
- wherein the channel section (59) is connected with the hole (56).

6. Beverage machine according to claim 5,
wherein the channel section (59) is circular.

7. Beverage machine according to one of the claims 1 to 6,
wherein the water channel (56, 59; 106) is arranged in the floor of the water tank (1).

8. Beverage machine according to one of the claims 1 to 7,
- wherein the tank nozzle (5; 50) comprises a collar (8; 58) and
- wherein the water channel (6; 56, 59) is arranged below the collar (8; 58).

9. Beverage machine according to one of the claims 1 to 8,
wherein a valve (11, 12, 13) is provided at the outlet (10) of the water tank (1).
